# EUROPEAN PATENT APPLICATION

(11) **EP 3 264 798 A1**
(43) Date of publication of application: **03.01.2018**
(21) Application number: 17177136.3
(22) Date of filing: 21.06.2017
(51) Int. Cl.: H04R 25/00

(54) **CONTROL OF A HEARING DEVICE**

(30) Priority: 27.06.2016 EP 16176529
(71) Applicant: Oticon A/S, 2765 Smørum (DK)
(72) Inventor: SALVATUCCI, Antonello, DK-2765 Smørum (DK); PETERSEN, Svend Oscar, DK-2765 Smørum (DK); PEDERSEN, Michael Syskind, DK-2765 Smørum (DK); WALASZEK, Justyna, DK-2765 Smørum (DK); GULD, Morten, DK-2765 Smørum (DK); EKELUND, Caroline, DK-2765 Smørum (DK)
(74) Representative: William Demant

(57) **Abstract**

A hearing aid device for augmenting environment sounds to alleviate a hearling loss of the user. The hearing aid device comprises a sensor to sense an input from the user in order to change one or more operating parameters of the hearing aid.

## Description

### FIELD

The present disclosure relates to various methods and devices configured to control one or more settings of a hearing device such as a hearing aid.

### BACKGROUND

Hearing devices configured to be positioned at the ear of a user, such as in the ear canal or behind the pinna, are intended to be small and inconspicuous. The user/wearer is usually not interested in other people noticing that the wearer is wearing a hearing aid, thus a reducing of the size of the hearing aid is important. However, when reducing the size of the housing of the hearing aid, the surface area reduces and the possibilities of placing useful input devices, such as buttons etc. is reduced. However, the user still needs an interface e.g. for setting/changing the volume or having the hearing aid enter a low power mode, such as flight mode. Therefore alternative ways of providing input to the processor of a hearing device is needed. The proposed methods for controlling the hearing device has an advantage over e.g. voice control, as the user controls, e.g. by blowing, tapping, touching, magnetic stimulation or head movements as will be discussed below, is inaudible and hereby more discreet.

Even though using a remote control would be a possibility, such a device is not always available. This disclosure also addresses the case where a remote control is not available Therefore, there is a need to provide a solution that addresses at least some of the above-mentioned problems. The present disclosure provides at least an alternative to the prior art.

The document US 2014/321682 disclose a portable hearing assistance device comprises an input unit, an output unit, a forward path between the input unit and the output unit, and an energy source for energizing components of the hearing assistance device. The hearing assistance device further comprises a control unit to control activation (or deactivation) of a low-power mode of operation of the hearing assistance device.

The document WO 2014/108576 disclose a hearing assistance system comprising a handheld audio signal transmission unit for transmitting an audio signal via a wireless link to at least one receiver unit for reception of audio signals from the transmission unit via the wireless link, and means for stimulating the hearing of a user according to an audio signal supplied from the receiver unit.

The document US 2006/210104 disclose a user interface for remotely controlling the operational state of a hearing device positioned in the ear canal. The interface comprises a controller, a switch coupled to the controller and an audio port coupled to the controller. The controller switches between the operational states of a hearing device having at least a first and a second operational state, such as an off-state, an on-state. The switch receives inputs from the user to change the operational state of the hearing device and is actuable by an external magnetic field source held in the hand of the user within a selected proximity envelope from the switch. The controller switches between the states responsive to a pattern of movement of the magnetic field source made relative to the proximity envelope. The audio port produces an audio output indicating to the user the operational state of the hearing device.

The document EP 2 991 380 discloses a hearing assistance device adapted for being located in or at a specific one of a left or a right ear of a user, and comprising an input unit for receiving an input signal and an output unit for providing an output signal. The document discloses a scheme for detecting left/right placement of a hearing device.

### SUMMARY

According to an aspect, the present disclosure relates to hearing aids having a sensor for sensing a physical parameter and operating the hearing aid based on signals from the sensor.

In a first aspect the present disclosure relates to a hearing aid. The hearing aid may comprise an input transducer providing an electrical signal in response to receiving acoustic signals from the environment. The input transducer may be a microphone system, such as a directional microphone system, adaptable directional microphone system or the like, alternatively an external device transmitting a signal to the hearing aid, which the hearing aid is then to present to the wearer. The hearing aid may comprise a processor adapted to apply a signal processing algorithm to the electrical signal to compensate for a user's specific hearing loss. The hearing loss is usually determined earlier by a trained professional, or may be determined using automated computer software. The hearing aid may comprise an output transducer outputting the processed signal which the user then perceives as sound. This may be acoustic signal presented to the ear canal, vibrational signal presented via a bone-anchored system, an electrical signal applied directly to the cochlea of the wearer. The hearing aid may comprise a wireless interface adapted to communicate with an external device. The wireless interface may include one or more antennae and/or inductive coils for communicating at an appropriate frequencies, e.g. around 2.4 GHz or lower frequencies for the inductive communication, e.g. around 500 MHz. Having different types of antenna allows for communication at multiple frequencies, e.g. one type for communicating between devices positioned at respective opposite ears and one type for communicating with external devices. The communication may be conducted using protocols such as Bluetooth or proprietary protocols, or even a mix of protocols. The hearing aid may comprise a sensor adapted to provide a signal representing a physical parameter. The sensor may be of a suitable type such as discussed elsewhere in the present specification. The hearing aid may comprise a controller configured to control the operation of the processor receiving the electrical signal and the controller being adapted to provide a control signal based on the signal from the sensor, the controller changing the state of the processor and/or the wireless interface based on the control signal. The processor is preferably a digital processor specifically intended for signal processing. The processor may physically be part of a lager application specific integrated circuit, ASIC, where e.g. multiple processors are integrated in one component. The controller may be operated in any of a range of modes, e.g. by setting a threshold before changing state for the controlled setting. The controller may utilize multiple thresholds, and/or multiple sensors may be used. Other types of triggers may be implemented.

The setting may be one or more of volume, program, noise reduction, feedback management, wired or wireless connection, flight mode or any other suitable setting in a hearing aid.

The sensor used may be a tilt sensor adapted to sense the hearing aid being tilted in one, two or three axis and generate a corresponding tilt sensor signal. Using a tilt sensor allows the user to control the setting by tilting the hearing aid, which may be done inconspicuously.

The sensor may include a radar chip configured to transmit and receive high frequency radar signals, this may include sensing Doppler shift and/or reflected signals to determine or detect user input in the form of e.g. hand gestures. Using low power signals it could be possible to limit the detection of gestures to close proximity, which could help reduce false-positives and inadvertently change settings in the hearing aid that was not intended to be set or changed.

The radar sensor may be used for detecting finer gestures such as finger movements at further distances, thus allowing for more discretion.

One further advantage of the use of radar includes reduction in unwanted noise arising from physical contact with the hearing aid, e.g. when pressing a button or the like physical interaction with the hearing aid. This could be beneficial in situations where the environment is quiet and physically contacting the hearing aid with one or more fingers would cause noise which would have to be dealt with in a noise cancellation processor. Further, the use of radar alleviates dexterity issues which prevent some users from locating the hearing aid at the ear or from locating and pressing a button on the hearing aid. It also reduces or eliminates the need for having to use a remote control, e.g. an app, which some people may find obtrusive or too complicated.

The hearing aid having an integrated radar could regularly emit radio waves while sensing and interpreting reflections. This could include different hand gestures and fine finger movements to indicate instructions relating to different hearing aid functions, e.g. change to next program, increase microphone input sensitivity, increase output volume, decrease tinnitus sound generator volume, activate omnidirectional mode, change noise reduction algorithm, etc. These gestures, and also the other mentioned throughout the present disclosure could be programmed by a hearing care professional who provides e.g. a list of gestures to the end user in a clinic, alternatively, or in addition to that, the user could program gestures personally, e.g. via an interactive session using a smartphone or tablet or other electronic device with a screen. This screen could be used to illustrate to the user a range of suitable gestures that the system easily recognise.

The sensor may be used for volume control of the hearing aid or wherein the sensor may used for operating the wireless interface to a low power or off state. Some of the most often used commands or controls include turning volume up or down and it would be advantageous to provide a hearing aid to a user where this command can be executed in a discrete, inconspicuous way, and often the use of a remote device is not possible or would also be annoying to the user as it would direct the users attention to a separate device which other people could conceive as impolite e.g. during a conversation.

A predefined motion pattern may be stored in the hearing aid and a sensor controller could be adapted to analyze signals from the sensor in order to recognize motions of the hearing aid corresponding to the predefined motion pattern. The sensor controller could be part of the controller configured for controlling the operation of the processor or it could be.

The predefined motion pattern may include two or more movements measured in one, two or three axis. In this context the motion may be acceleration, displacement, orientation or any combinations thereof. The specific pattern may be configurable, e.g. defined by the user him or herself.

The sensor may be a wind noise detector, which may be connected to the input transducer and configured to detect the presence of wind noise in the electrical signal, the controller may then be configured to changing the state of the digital processor and/or the wireless interface based on the presence of a wind noise pattern. The wind noise detection may be based on calculation of correlation between two or more microphone signals, or any other suitable way of detecting wind noise.

The wind noise pattern may comprises one, two, three, four or more short bursts of air. The pattern could be used as input by having the user blowing air at a microphone assembly.

In addition to the sensor mentioned above, the hearing aid may comprise a second sensor, wherein the second sensor is then configured or adapted to sense a physical parameter different from the physical parameter sensed by the sensor and the controller is configured to control the operation of the hearing aid based on the signal from the sensor and the second sensor. The sensor may then be termed a first sensor. Having two sensors, or more, sensing different physical parameters allow even more complex patterns to be defined, which consequently may reduce the risk of false positive input detection, which e.g. could be an adjustment of volume even though it was not intended at that particular point in time.

The physical parameter may include movement along and/or rotation about an axis. This could include shaking or tilting or pushing or rotation the housing of the hearing aid.

The physical parameter may include a parameter characterizing a magnetic field, and the hearing aid may then include a magnetic field detector providing a corresponding signal. This could be a coil outputting an electrical signal based on received magnetic field.

The hearing aid may be configured to detect presence or absence of a static or varying magnetic field and/or the duration of presence and/or absence of the static or varying magnetic field and/or frequency of the varying magnetic field.

An aspect of the present disclosure relates to a container configured for storing a hearing aid according to any aspect of the present disclosure, wherein the container comprises a compartment for holding the hearing aid, a magnet arranged to provide a magnetic field inside the compartment so that when the sensor in the hearing aid is exposed to the magnetic field the hearing aid is operation accordingly.

The magnet in the container may provide a permanent or variable magnetic field. A permanent magnetic field may e.g. be established by a permanent magnet in the container. A variable magnetic field may e.g. be established by a coil connected to appropriate controller.

An aspect of the present disclosure relates to a binaural hearing system comprising a first and a second hearing aid according to the any aspect of the present disclosure, wherein during normal operation of the first and second hearing aid in the binaural hearing system, both first and second hearing aid are adapted to transmit information on detected tilt to the respective other hearing aid so that a decision on turning volume up or down in both hearing aids is made depending on a combination of detected tilt in the hearing aid and detected tilt information being received.

In a further aspect, the present disclosure relates to a hearing aid with an adaptable directional microphone system, wherein the hearing aid comprises a sensor for detecting and/or sensing the present orientation of the hearing aid and/or a change in orientation of the hearing aid, and the adaptable microphone system being configured to be operated based on the sensed or detected orientation so that when the sensed or detected orientation corresponds to the hearing instrument being worn at an ear of a user in a substantial horizontally orientation, the adaptable directional microphone system is enabled, and when the sensed or detected orientation corresponds to the hearing instrument being worn and not in a substantial horizontally orientation, the adaptable directional microphone system is operated in an omnidirectional mode.

Directionality in hearing aid instruments is most useful in the horizontal orientation as most sounds of interest are found in this direction. Typically noise reduction is only needed when the hearing aid instruments are pointing in the horizontal direction. If, for instance, the user is looking upwards or downwards, speech intelligibility in noise is typically not the main issue. In such situations, directional noise reduction is thus often not desirable, and omnidirectional listening is often preferred. Hearing aid instruments including a sensor or detector, such as an accelerometer, may be utilize such a sensor or detector to control whether noise reduction is needed or not. Basically, if the hearing aid instrument or instruments do not point in the horizontal direction, directional noise reduction may be disabled.

For instance, when the person wearing one or two hearing aids, is walking or sitting, it is assumed that situations arises where enhancing sounds from a special direction is desirable, e.g. from another person talking while sitting or standing in the vicinity. However, if the person wearing hearing aids are looking up, e.g. into the sky, or even lying down, it may be assumed that sounds from the environment does not need a special direction to be enhanced, the person could e.g. be sleeping in a quiet room when lying down.

This aspect could be described as a method for operating a hearing aid, the hearing aid having an adaptable directional microphone system and a sensor configured for sensing the orientation of the hearing aid during use, and the method includes adapting the adaptable directional microphone system based on a signal from the sensor. The sensor could be any of the types of sensors disclosed herein, and provide a signal indicative of the orientation of the hearing aid. The signal could be compared to a threshold. This could be useful to determine if, e.g. a longitudinal axis of the hearing aid, is outside a predetermined orientation, e.g. limited by a cone relative to e.g. vertical. The cone could represent an uncertainty limit, or simply a threshold, where, when the orientation is within this cone, the assumption is that the hearing aid is orientated vertically. There could be defined more than one threshold, so that more than two functions may be switched between. More than one threshold or level could be used for defining a degree of switching between directional and omnidirectional operation of the microphone system. The progression from full directional operation to full omnidirectional could include several steps where a directional signal is mixed with an omnidirectional signal. Examples include 10% omnidirectional and 90% directional signal, 50% of each of the omnidirectional and the directional signal, 90% omnidirectional and 10% directional signal, or other combinations. A number of thresholds, e.g. 10, could be defined, where each specific step is translated into a specific mixture of omnidirectional and directional signal, e.g. in the case of 10 thresholds each step could correspond to a change of 10% mixture, so that between 0 and 10 degrees corresponds to 100% of either one of the omnidirectional or directional signal. Other combinations of steps and thresholds are also possible.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
Fig. 1 schematically illustrates a hearing aid of a RITE-type,
Fig. 2 schematically illustrates a hearing aid of a BTE-type,
Fig. 3 schematically illustrates elements of a hearing aid,
Figs. 4 and 5 schematically illustrates elements of a hearing aid comprising a wind noise detector,
Figs. 6 schematically illustrates using a sensor for disabling wireless functions in a hearing aid instrument,
Fig. 7 schematically illustrates using a magnetic sensor in a period of time for disabling functions in a hearing aid instrument,
Fig. 8 schematically illustrates using a sensor for muting a hearing aid instrument,
Fig. 9 and 10 schematically illustrated using a wind noise detector in a hearing aid for controlling the hearing aid,
Fig. 11 schematically illustrates head movement, or hand movement, for control of a hearing aid,
Fig. 12 schematically illustrates details of moving a hearing aid instrument for controlling functions in the hearing aid instrument,
Fig. 13 schematically illustrates a hearing aid instrument user with a hearing aid instrument,
where the user is walking with his head in an up-right position,
Fig. 14 schematically illustrates a hearing aid instrument user with a hearing aid instrument,
where the user is walking with his head in a tilted position,
Fig. 15 schematically illustrates a hearing aid instrument user with a hearing aid instrument, where the user lying down, and
Fig. 16 schematically illustrates two hearing aid instruments where mutual magnetic fields are used for controlling functions in each of the hearing aid instruments.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include microprocessors, microcontrollers, digital signal processors (DSPs), field programmable gate arrays (FPGAs), programmable logic devices (PLDs), gated logic, discrete hardware circuits, and other suitable hardware configured to perform the various functionality described throughout this disclosure. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

A hearing aid is adapted to improve or augment the hearing capability of a user by receiving an acoustic signal from a user's surroundings, generating a corresponding audio signal, possibly modifying the audio signal and providing the possibly modified audio signal as an audible signal to at least one of the user's ears. A "hearing device" may further refer to a device such as an earphone or a headset adapted to receive an audio signal electronically, possibly modifying the audio signal and providing the possibly modified audio signals as an audible signal to at least one of the user's ears. Such audible signals may be provided in the form of an acoustic signal radiated into the user's outer ear, or an acoustic signal transferred as mechanical vibrations to the user's inner ears through bone structure of the user's head and/or through parts of middle ear of the user or electric signals transferred directly or indirectly to cochlear nerve and/or to auditory cortex of the user.

The hearing device, specifically the hearing aid, is adapted to be worn in any known way. This may include i) arranging a unit of the hearing device behind the ear with a tube leading air-borne acoustic signals into the ear canal or with a receiver/ loudspeaker arranged close to or in the ear canal such as in a Behind-the-Ear type hearing aid, and/ or ii) arranging the hearing device entirely or partly in the pinna and/ or in the ear canal of the user such as in a In-the-Ear type hearing aid or In-the-Canal/ Completely-in-Canal type hearing aid, the hearing device may comprise an input transducer positioned at the ear canal and/or an input transducer positioned behind the pinna , or iii) arranging a unit of the hearing device attached to a fixture implanted into the skull bone such as in Bone Anchored Hearing Aid or Cochlear Implant, or iv) arranging a unit of the hearing device as an entirely or partly implanted unit such as in Bone Anchored Hearing Aid or Cochlear Implant.

A "hearing system" refers to a system comprising one or two hearing devices, and a "binaural hearing system" refers to a system comprising two hearing devices where the devices are adapted to cooperatively provide audible signals to both of the user's ears. The hearing system or binaural hearing system may further include auxiliary device(s) that communicates with at least one hearing device, the auxiliary device affecting the operation of the hearing devices and/or benefitting from the functioning of the hearing devices. A wired or wireless communication link between the at least one hearing device and the auxiliary device is established that allows for exchanging information (e.g. control and status signals, possibly audio signals) between the at least one hearing device and the auxiliary device. Such auxiliary devices may include at least one of remote controls, remote microphones, audio gateway devices, mobile phones, public-address systems, car audio systems or music players or a combination thereof. The audio gateway is adapted to receive a multitude of audio signals such as from an entertainment device like a TV or a music player, a telephone apparatus like a mobile telephone or a computer, a PC. The audio gateway is further adapted to select and/or combine an appropriate one of the received audio signals (or combination of signals) for transmission to the at least one hearing device. The remote control is adapted to control functionality and operation of the at least one hearing devices. The function of the remote control may be implemented in a SmartPhone or other electronic device, the SmartPhone/ electronic device possibly running an application that controls functionality of the at least one hearing device.

In general, a hearing device includes i) an input unit such as a microphone for receiving an acoustic signal from a user's surroundings and providing a corresponding input audio signal, and/or ii) a receiving unit for electronically receiving an input audio signal. The hearing device further includes a signal processing unit for processing the input audio signal and an output unit for providing an audible signal to the user in dependence on the processed audio signal.

The input unit may include multiple input microphones, e.g. for providing direction-dependent audio signal processing. Such directional microphone system is adapted to enhance a target acoustic source among a multitude of acoustic sources in the user's environment. In one aspect, the directional system is adapted to detect (such as adaptively detect) from which direction a particular part of the microphone signal originates. This may be achieved by using conventionally known methods. The signal processing unit may include amplifier that is adapted to apply a frequency dependent gain to the input audio signal. The signal processing unit may further be adapted to provide other relevant functionality such as compression, noise reduction, etc. The output unit may include an output transducer such as a loudspeaker/ receiver for providing an air-borne acoustic signal transcutaneously or percutaneously to the skull bone or a vibrator for providing a structure-borne or liquid-borne acoustic signal. In some hearing devices, the output unit may include one or more output electrodes for providing the electric signals such as in a Cochlear Implant.

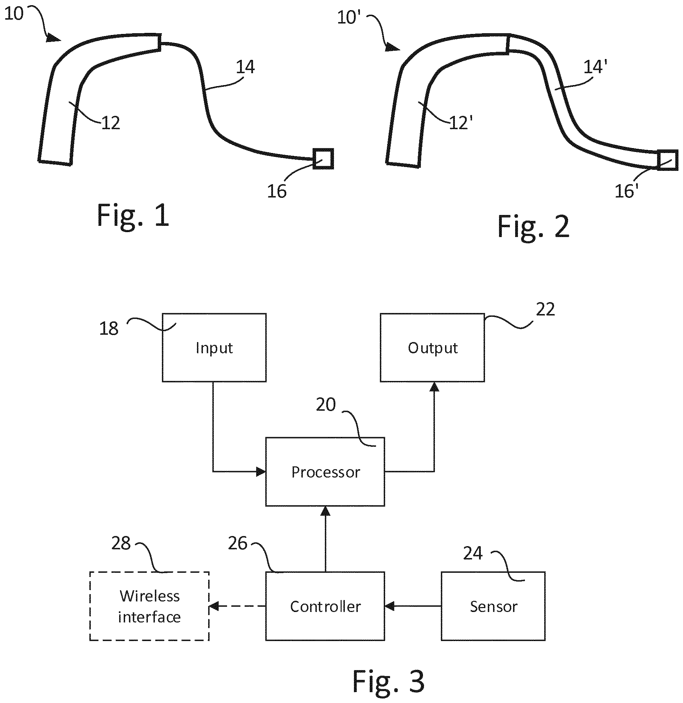

Now referring to Fig. 1, which illustrates a hearing aid 10 according to an aspect of the disclosure. The hearing aid comprises an input transducer 12, here in the form of a directional microphone system based on two omnidirectional microphones, but the input transducer could also be based on other systems such as wireless reception of audio signals. Further, the input transducer could be based on a combination of at least one microphone positioned in the housing behind the ear, and at least one microphone positioned in the in-the-canal part. Further alternatively, the input transducer could be a remote device transmitting an audio signal to the hearing aid 10, such as a mobile phone, a wirelessly connected microphone, an announcement system or PA system. When the input transducer includes a wireless interface, the transmission may be based on inductive or radio frequency transmission, e.g. Bluetooth or the like, or any other suitable type of transmission.

The input transducer generally provides an electrical signal in response to receiving acoustic signals from the environment. The hearing aid further comprises a processor adapted to apply a signal processing algorithm to the electrical signal to compensate for the user's specific hearing loss. This hearing loss is preferably determined by a health care professional conducting a range of tests, e.g. listening tests and the like.

The processor could be a special purpose digital processor, often referred to as an ASIC (application specific integrated circuit), or be based on a general purpose processor with specialized software, i.e. embedded software.

The hearing aid further comprises an output transducer outputting the processed signal which the user then perceives as sound. Here the output transducer is a speaker which provides an acoustic signal received by the user's tympanic membrane, but could alternatively be a bone conducted signal or a signal provides to the user via a cochlea implant. The hearing aid further comprises a wireless interface adapted to communicate with an external device. This could be based on inductive communication or high frequency communication, such as 2.4 GHz. Further, the hearing aid could comprise both inductive communication and high frequency communication transceivers.

The data communicated to and from the hearing aid may include data based on Bluetooth, such as Bluetooth low-energy or other suitable data protocol or protocols.

Fig. 1 schematically illustrates a hearing aid 10 having a housing 12 configured to be positioned behind the ear, i.e. between the pinna and the head, of a user. The housing 12 is connected via a connecting element 14 to an in the ear part configured to be positioned at least partly in the ear canal of the user. This in-the-ear part 16 comprises an output transducer, here a speaker. In some instances the in-the-ear part 16 may further comprise one, two or even more, microphones. The microphone or microphones may be oriented towards the environment and/or the inner ear/ear drum. The connecting element 14 comprises two wires for transmitting an electric signal to the output transducer so as to play sound to the user. The housing 12 comprises the majority of the electronic components of the hearing aid 10, such as power supply, digital processors, analogue to digital converters, wireless interface etc. The two wires in the connecting element 14 may be used as at least part of an antenna arrangement, e.g. for 2.4 GHz communication. Additional components may be present in the connecting element, e.g. a third wire wound around the two wires carrying the audio signal.

Fig. 2 schematically illustrates a hearing aid 10' having a housing 12' configured to be positioned behind the ear, i.e. between the pinna and the head, of a user. The housing 12' is connected via a connecting element 14' to an in the ear part configured to be positioned at least partly in the ear canal of the user. The housing 12' comprises an output transducer to provide an acoustic signal. The in-the-ear part 16' comprises a plug, or ear mold, for retaining the in-the-ear part in the opening of the ear canal. The connecting element 14' comprises a tube for conducting sound from the housing to the ear canal of the user so as to play sound to the user. The housing 12' comprises the majority of the electronic components of the hearing aid 10, such as an output transducer in the form of a speaker, a power supply, digital processors, analogue to digital converters, wireless interface etc. The connecting element 14' may include at least one wire used as at least part of an antenna arrangement, e.g. for 2.4 GHz communication or the like. Additional components may be present in the connecting element.

The hearing aid 14, 14' comprises a sensor adapted to provide a signal representing a physical parameter. This is schematically illustrated in Fig. 3, where an input transducer 18 is connected to a processor 20. The processor 20 performs audio processing, such as frequency specific amplification and/or frequency transpositioning, feedback management, noise reduction etc. The processor 20 may be embodied by more than one signal physical element each performing one or more functions. The processed signal from the processor 20 is forwarded to an output transducer 22. The output transducer 22 may, as illustrated in Figs. 1 and 2, be positioned in a hearing aid housing or an in-the-ear part or even be an implanted device implanted in the head of the user.

A sensor 24 is provided and configured to sense one or more physical parameters. The sensor 24 provides a corresponding sensor signal representing the physical parameter sensed.

One option is to sense tilt, or inclination, in one or more directions. This will allow the sensor to detect that the hearing aid that include the elements of Fig. 3 is tilted and/or moved.

The sensor 24 is connected to an evaluation circuit or controller 26. The controller 26 analyses the signal from the sensor 24. The analysis includes comparing/matching the signal to one or more predefined patterns. When the sensor is, or includes, sensing motion, the pattern is, or includes, a motion pattern. A pattern could be a number of, repeated, tilt motions in a specific direction within a given time frame or with defined intervals, e.g. three tilts within 2 seconds. In the present context this will mean that the user, while wearing the hearing aid, may wish to e.g. change the volume/amplification, such as turn the volume up or down, and may do this by moving his or her hand to the hearing aid and gently pushing and/or pulling the device so that it tilts or pivots near its position on the pinna e.g. three times. This motion pattern is then recorded by the sensor and analyzed by the controller. When a decision can be made that a specific motion pattern was executed by the user this is translated to a control signal applied to the processor 20.

In some instances the hearing aid may be programmed, e.g. wirelessly, to perform different functions, e.g. the input sensor may be performed to perform a different task, sometimes it may be desirable to have the input perform volume change, while sometimes it may be more desired to perform program change or other functions. This could be selected using a remote device, such as a smartphone having a graphical user interface that the user then selects the desired function, e.g. for a specified period of time.

In Fig. 3 a wireless interface 28 is illustrated in dashed lines as this is optional to the hearing aid.

Generally, the signal from the sensor is analyzed to determine if the (if any) pattern in the sensor signal corresponds to a predefined pattern associated with a corresponding command, e.g. turn the volume up or down, or turn off or turn on a specific function, e.g. turning the wireless interface into a low power mode or off mode, such as a flight mode. The analysis may include the use of neural networks and/or fuzzy logic for decision making.

The patterns are provided from an external source and may be a set of standards defined by e.g. the supplier, but may alternatively comprise or be completely defined by the user. This could be done during the individualization process of the hearing aid, often referred to as the fitting procedure.

The tilt sensor could be a MEMS-based single-axis or dual-axis tilt sensor module. Further, the sensor could include internal signal conditioning. The tilt sensor may include mercury switches, tilt switches or rolling ball sensors, an accelerometer, or may be a composite sensor comprising a number of tilt sensors to measure e.g. along/in several axis simultaneously. The sensor may advantageously be temperature-compensated so that temperature changes emanating from the closeness to the users head is minimized.

In an alternative, or in addition to the above, the sensor may include a magnetic sensor, such as an Anisotropic Magneto-Resistive magnetic sensor, where the resistance of the sensor varies with the applied magnetic field. This could for instance be used to detect that the user places the hearing aid near a static or varying magnetic field, such as produced by a wireless charging device or a permanent magnet. The user could carry a small permanent magnet device for this purpose. A device for storing and charging the hearing aid could include a permanent or varying field magnet to communicate with the sensor, whereby the sensor is able to detect that the hearing aid has been placed for recharging.

In an alternative, or in addition to the above, the sensor may include a capacitive sensor, where the capacitance changes when e.g. one or more fingers approach the hearing aid. A combination of a capacitive sensor and a tilt or inclination sensor could be beneficial in reducing the processing to periods only when the presence or proximity of a finger is detected by the capacitive sensor.

In an alternative, or in addition to the above, the sensor may include a wind noise detector. The wind noise detector is then either connected to its own wind noise detection input transducer, or receives or eavesdrops on the signal from the input transducer 18. The wind noise detector is configured to analyze the audio signal to detect the presence, and/or absence, of wind noise. This results in a wind noise pattern which is then analyzed to determine if the wind noise pattern corresponds to a predefined pattern associated with a corresponding command as discussed above.

In an alternative, or in addition to the above, the sensor may include a temperature sensor. The temperature sensor may be used to detect touching of the hearing aid, as a, albeit short, touch of a finger will cause a slight increase in temperature. The temperature sensor should be placed near the housing surface in a part easily accessible to a finger while the hearing aid is mounted at the pinna. As with the capacitive sensor, the temperature sensor may be combined with e.g. the tilt sensor to reduce the number of false detections of movement.

The sensor may also be combined with microphone signals, as fingers moving across the instrument will not only affect the capacitive sensor, but also make an audible near-field sound, which can be detected in the microphone signal.

In an alternative, or in addition to the above, the sensor may include a flex sensor in the RITE wire/tubing.. As the sensor is flexed, the resistance across the sensor increases, alternatively decreases, and thereby provide an indication to the controller that the connector 14, i.e. either the RITE-wire and/or tube, is bend. This input is then used for the controller to detect patterns.

In an alternative, or in addition to the above, the sensor may include a force sensitive resistor, which will vary its resistance depending on how much pressure is being applied to the sensing area. This may be a good alternative to a button as the user may squeeze the housing to provide his input. This input is then used for the controller to detect patterns.

Further, the strength of the magnetic signal may be used as an indication for proximity of the other hearing aid. When the two hearing aids of a binaural hearing system are placed at the respective ear the magnetic signal is at a first level and when the two hearing aids are placed closely together the magnetic signal is at a second, higher level. This level could then also be used as an input for the controller. Patterns could include the two hearing aids being repeatedly brought close and further away, e.g. three times close together could indicate that the hearing aids should enter a low power mode. The level could be an expression of the magnetic link strength.

A controller 26 controlling the operation of one or more processors, such as the processor 20 processing the input signal and/or the processor controlling the operation of a wireless interface is provided. The controller 26 is configured to receive the signal from the sensor 24 and is further configured to provide a control signal based on the signal from the sensor 24. The controller 26 and the sensor 24 may be part of the same integrated device. When the controller 26 has determined if an appropriate pattern is recognized from via sensor 24, the controller 26 causes a change in the state of the digital processor and/or the wireless interface based on the control signal. The controller 26 may physically be a part of the processor 20, i.e. as part of a larger integrated circuit.

The pattern or patterns that the controller seeks to recognize in the signal from the sensor are stored in a memory device in the hearing aid. Alternatively the pattern or patterns may be stored in an external device, e.g. a remote server or a mobile phone or the like. Through the wireless interface the patterns may be updated or augmented.

When the pattern is a motion pattern, the motion pattern could for instance include two or more movements measured in one, two or three axis. This could for instance include one tilt in one direction and one tilt in another direction, within a certain period of time.

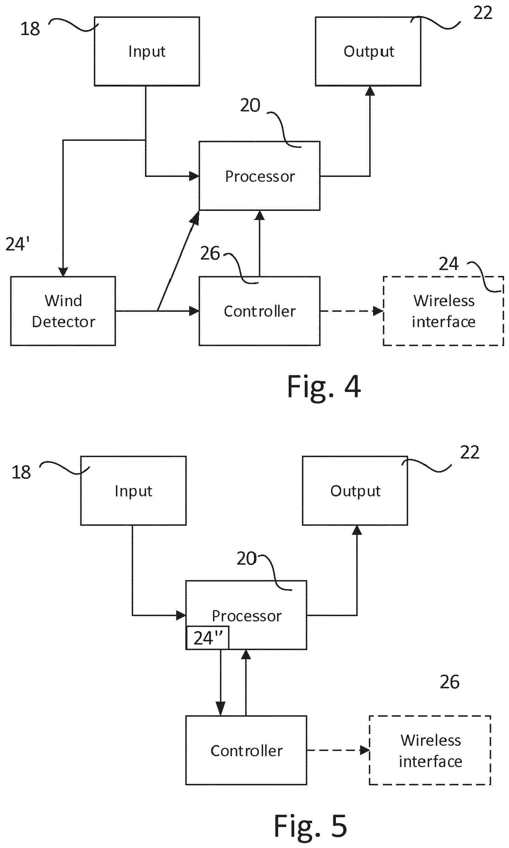

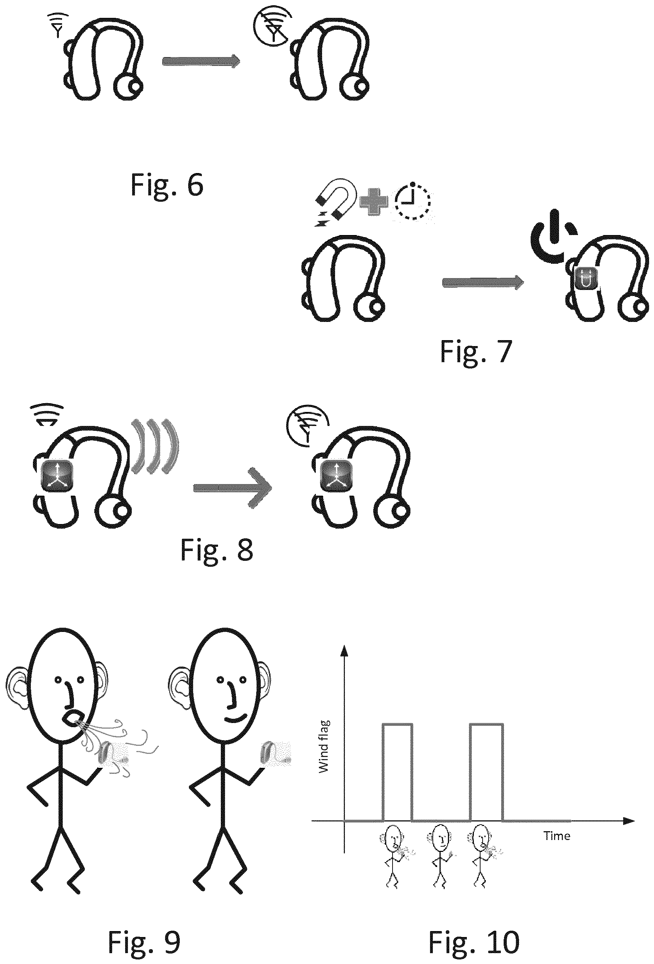

Hearing aids often include a wind noise detector, as wind noise generally is annoying for the person wearing the hearing aid. When the sensor as illustrated in Fig. 3 is, or includes, a wind noise sensor 24' as illustrated in Fig. 4, the pattern includes wind noise patterns defined by the presence or absence of wind noise in predefined time periods. One could e.g. imagine that a command is given by the user blowing, as illustrated in Fig. 9, twice with a short pause in between, as illustrated in Fig. 10. By blowing at the hearing aid, turbulence is created around the instrument. By blowing in a pattern, which is unlikely to be created from wind, the wind noise detector 24' can be used as a command tool for communication with the hearing device. Generally, such wind noise patterns could for instance comprise one, two, three, four or more short bursts of air within a given time period, such as two or three seconds. The more complex the pattern is the less likely it is that the pattern would occur naturally. It is, however, not always possible to guarantee that the predefined pattern occur naturally and in such cases the user will have to reestablish the previous setting himself.

In the case where the user is wearing two instruments, information may be exchanged between the two devices wirelessly.

In the case where the user is wearing two instruments, a confirmation message could be played by the instrument which has not been given the command. Sensor signals may also benefit from being exchanged binaurally, either to increase the detection probability or to allow more complex detection patterns. Alternatively, or in addition, the device receiving the command could issue an audible confirmation message. The user is then requested to confirm the command e.g. by repeating the command or via other type of input. Hereby it is avoided that the radio communication is turned off unintentionally. Further, by issuing a, preferably audible, confirmation to the user, the user will be aware that the radio communication is turned off. Confirmation may be issued to other device, such as a mobile phone prior to turning off the wireless communication.

The sensor 24 may be constituted by a first and a second sensor, where the second sensor senses a physical parameter different from the physical parameter sensed by the first sensor. This allows even more complex patterns, e.g. as outlined above a combination of a sensor for sensing movement and another sensor for sensing the presence of a finger/hand, or one sensor for sensing tilt in one or two axis, and a second sensor for sensing wind noise. Whichever combination is present, the controller is configured to control the operation of the hearing aid based on the signals from the sensors, such as the first sensor and the second sensor and possibly more sensors.

In the hearing aid, the physical parameter could include movement along and/or rotation about an axis, which could include, either on their own or in combination, shaking and/or tilting and/or rotation. Further, there could be several of each of the types of movements.

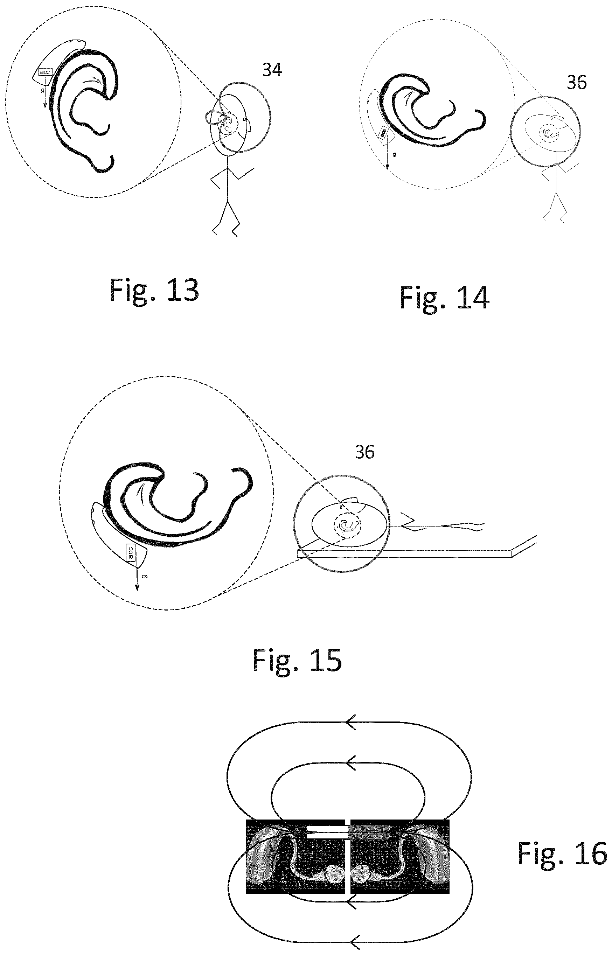

As illustrated in Fig. 7 and Fig. 16, the physical parameter could include a parameter characterizing a magnetic field, and the hearing aid should then include a magnetic field detector providing a corresponding signal. The magnetic field detection is then used to toggle between the different operational modes. As an example, a short presence of magnetic field could deactivate the radio, or bring the radio to a low power mode, sometimes referred to as flight mode. A prolonged presence of the magnetic field could be interpreted as command to set the hearing aid into a standby mode. This could for instance be useful as a detection of the hearing aid being placed in a, wireless or contact, charger device. As illustrated in Fig. 16, the magnetic field may originate from one of the hearing instruments in a binaural hearing aid system. The magnetic field may originate from both instruments in a binaural hearing aid system.

The magnet device providing the magnetic field could be built into a storage box, or container, for the hearing aid. The container could then be configured for storing the hearing aid and the container may comprise a compartment, e.g. a drawer or the like, for storing the hearing aid. The container further comprises a magnet arranged to provide a magnetic field inside the compartment so that when the sensor in the hearing aid is exposed to the magnetic field the hearing aid is operated accordingly.

If placed at a certain, predefined, way in the storage box, the specific magnetic field could be recognized and exchanged between the hearing device instruments in order to ensure that the instrument do not turn off if it is exposed to any magnetic field but only if they are exposed to the specific magnetic field.

The magnet in the container provides a permanent or variable magnetic field. Further, holding the container or storage box near the hearing aid would enable the hearing aid to detect a magnetic field and thereby perform the associated action, e.g. turning off the radio. Reactivating the radio could be done by rebooting the instrument, e.g. by removing the battery and reinserting the battery or by any other reboot command to the hearing aid.

By placing the hearing aid in the storage box, the hearing aid would be permanently exposed to the magnetic field and would set the hearing aid into the standby mode without a need of opening the battery drawer of the hearing aid, an action which might be cumbersome for some users, and further, the battery in the hearing aid may even be inaccessible for a number of reasons.

When the hearing aid or aids are again removed from the storage box, the magnetic field will no longer influence the hearing aid, and the hearing aid then return from standby, or power off or low power, mode to normal usage mode.

The hearing aid may even be configured to detect presence or absence of a static or varying magnetic field and/or the duration of presence and/or absence of the static or varying magnetic field and/or frequency of the varying magnetic field. This pattern may then form basis for decision making on which kind of command was intended by the user.

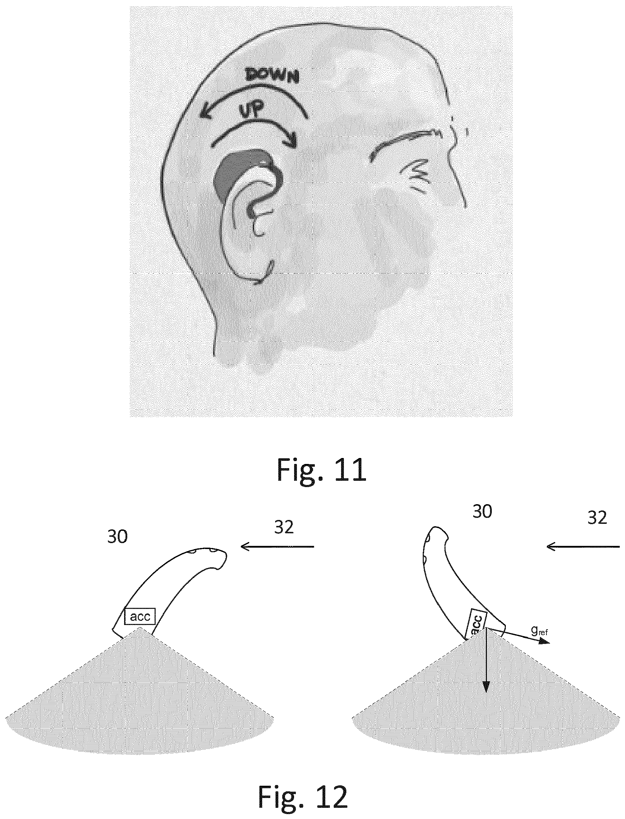

When using the sensor 24 for volume control, the user can adjust the volume of the hearing aid by the very natural gesture of gently tilting his or her hear forward or backward as if it was a radio knob, e.g. as illustrated in Fig. 11. Detection of 'false positives', typically due to head movement, may be prevented, or at least alleviated, by using a one of the following methods: tuning of the detection algorithm and threshold/timeout values. comparison with the movement detected by the accelerometer sitting on the other hearing aid. I.e., a normal head movement will always cause both hearing aids to detect the same type of movement, while the user tilting her hear to adjust volume will cause only one of the hearing aids to detect the movement. Alternatively, head movements could be used solely as a confirmation command, i.e. the head movement may only be interpreted as a command, if it follows another command detected by another sensor.

For a user with two hearing aids, configured in a binaural hearing system, there are further possibilities. The binaural hearing system then a first and a second hearing aid as described above. During normal operation of the first and second hearing aid in the binaural hearing system, both the first and the second hearing aids are adapted to transmit information from the sensor, e.g. any patterns recognized, or even just the detection of e.g. tilt, to the respective other hearing aid so that a decision on turning volume up or down in both hearing aids is made depending on a combination of detected tilt in the hearing aid and detected tilt information being received from the other hearing aid. This could for instance be a downward tilt of the left hearing aid and an upward tilt of the right hearing aid, or vice versa. The tilt could be static during the turning up or down of the volume, meaning that the user need not keep tilting the hearing aids up and down, but simply hold them.

The user may be provided with an application for a mobile phone, or other computer device e.g. a tablet, where the user may define the function associated with the pattern. In case of multiple sensors, the use of different commands may be individualized. Some people may prefer to use head movements for controlling the instrument while other may prefer touching the instrument.

Fig. 12 schematically illustrates a hearing aid instrument 30 in two different conditions or orientations. On the left the hearing aid 30 is orientated in what here is denoted the vertical or up-right orientation. The hearing aid 30 is illustrated as having a Behind-the-ear housing, which is common in both the BTE and RITE configuration, a tube or wire conneting to an ear piece is not illustrated here. In this vertical orientation it may be assumed that the hearing aid 30 is positioned at the ear of the user, e.g. substantially behind the pinna. In an ITE housing, the vertical orientation may be more difficult to define generally, but when the housing has been given its physical form, a control measurement may be performed e.g. in a lab or when in position in the ear canal of the user, or, the orientation may be monitored continuously, e.g. over a (shorter) period of time, so that a base line orientation is established and deviations from this base line may be analyzed to determine the relative tilt or rotation of the hearing instrument when placed in the ear canal. The arrow 32 illustrates a direction from a target source in front of the user, i.e. the user's nose will point towards the tip of the arrow 32.

The tilt or rotation may be measured as a deviation from the direction of gravity. The arrow denoted 'g' illustrates the gravitational force. When the user has two hearing aids, i.e. a binaural hearing aid system, a sensor or detector in each hearing aid instrument may be used to perform the measurement.

In the right hand-side, the hearing aid instrument 30 is in a non-vertical orientation, here tilted backwards as if the user tilts the head back looking up, or halfway lying down. In this case, it may be assumed that the user does not need the directional microphone system to be operational, and may thus be switched to an omnidirectional mode.

The limit between enabling or disabling the adaptive directional microphone system may include using a threshold angle, or defining a period of time where the angle is in a certain range, or defining a period of time where the angle is not in a certain range or above or below or at a certain threshold level. This could prevent switching the adaptive microphone system on and off too many times, which may be audible for the user.

Fig. 13 schematically illustrates a situation where the hearing instrument 30 is up-right and positioned at the ear of a user that is looking directly ahead, i.e. not looking down or up. Directional noise reduction, illustrated by the directional beam pattern 34, is thus enabled.

Fig. 14 schematically illustrates a situation where the user is looking upwards. In that case, speech intelligibility is assumed not to be a main concern of the user and directional noise reduction is thus disabled, illustrated by the omnidirectional beam pattern 36. As illustrated, the orientation is compared to the gravitation force 'g'.

Fig. 15 schematically illustrates a situation where the user is lying down. In that case, speech intelligibility is assumed not to be a main concern and directional noise reduction is thus disabled, illustrated by the omnidirectional beam pattern 36.

Although illustrated in Fig. 14 and Fig. 15 that the microphone pattern is solely omnidirectional, some embodiments may include establishing a combination of the directional and the omnidirectional microphone signal so as to establish a hybrid. This could include no completely excluding all directionality when the user is looking up, but maintaining a smaller percentage, e.g. 10 %, of the directional signal.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element but an intervening elements may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method is not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

The claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

## Claims

1. A hearing aid comprising:
an input transducer providing an electrical signal in response to receiving acoustic signals from the environment, a processor adapted to apply a signal processing algorithm to the electrical signal to compensate for a user's specific hearing loss, an output transducer outputting the processed signal which the user then perceives as sound, a wireless interface adapted to communicate with an external device,
a sensor adapted to provide a signal representing a physical parameter,
a controller configured for controlling the operation of the processor receiving the electrical signal and the controller being adapted to provide a control signal based on the signal from the sensor, the controller changing the state of the processor and/or the wireless interface based on the control signal.

2. The hearing aid according to claim 1, wherein the sensor is a tilt sensor adapted to sense the hearing aid being tilted in one, two or three axis and generate a corresponding tilt sensor signal, optionally the tilt sensor is an accelerometer or gyroscope acting as a tilt sensor.

3. The hearing aid according to claim 1 or 2, wherein the sensor is used for volume control of the hearing aid or wherein the sensor is used for operating the wireless interface to a low power or off state or to use the detection to control external application on a wirelessly connected smartphone such as tilting/nodding of the head used to accept an incoming phone call, and/or shaking of the head to reject a phone call.

4. The hearing aid according to any one of claims 1-3, wherein a predefined motion pattern is stored in the hearing aid and a sensor controller is adapted to analyze signals from the sensor in order to recognize motions of the hearing aid corresponding to the predefined motion pattern.

5. The hearing aid according to claim 4, wherein the predefined motion pattern includes two or more movements measured in one, two or three axis.

6. The hearing aid of claim 1, wherein the sensor is a wind noise detector connected to the input transducer and configured to detect the presence of wind noise in the electrical signal, the controller configured to changing the state of the digital processor and/or the wireless interface based on the presence of a wind noise pattern.

7. The hearing aid of claim 6, wherein the wind noise pattern comprises one, two, three, four or more short bursts of air.

8. The hearing according to any one of claims 1-7, wherein the hearing aid, in addition to the sensor, comprises a second sensor, wherein the second sensor senses a physical parameter different from the physical parameter sensed by the sensor and the controller is configured to control the operation of the hearing aid based on the signal from the sensor and the second sensor.

9. The hearing according to any one of claims 1-8, wherein the physical parameter includes movement along and/or rotation about an axis.

10. The hearing aid according to claim 9, wherein the movement includes shaking and/or tilting and/or rotation.

11. The hearing aid according any one of claims 1-10, wherein the physical parameter incudes a parameter characterizing a magnetic field, and the hearing aid includes a magnetic field detector providing a corresponding signal.

12. The hearing aid according to claim 11, wherein the hearing aid is configured to detect presence or absence of a static or varying magnetic field and/or the duration of presence and/or absence of the static or varying magnetic field and/or frequency of the varying magnetic field.

13. A container configured for storing a hearing aid according to claim 11 or 12, wherein the container comprises a compartment for holding the hearing aid, a magnet arranged to provide a magnetic field inside the compartment so that when the sensor in the hearing aid is exposed to the magnetic field the hearing aid is operation accordingly.

14. The container according to claim 13, wherein the magnet in the container provides a permanent or variable magnetic field.

15. A binaural hearing system comprising a first and a second hearing aid according to any one of claims 1-13, wherein during normal operation of the first and second hearing aid in the binaural hearing system, both first and second hearing aid are adapted to transmit information on detected tilt to the respective other hearing aid so that a decision on turning volume up or down in both hearing aids is made depending on a combination of detected tilt in the hearing aid and detected tilt information being received from the other hearing aid.
